Europäisches Patentamt

European Patent Office

Office européen des brevets

(19)

(11) **EP 1 361 743 A1**

(12) **DEMANDE DE BREVET EUROPEEN**

(43) Date de publication:
**12.11.2003 Bulletin 2003/46**

(51) Int Cl.⁷: **H04M 19/04**

(21) Numéro de dépôt: **03291084.6**

(22) Date de dépôt: **06.05.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **07.05.2002 FR 0205723**

(71) Demandeur: **ALCATEL**
**75008 Paris (FR)**

(72) Inventeurs:
• **Bonnard, Pierre**
**92150 Suresnes (FR)**
• **Bourmeyster, Ivan**
**75015 Paris (FR)**

(74) Mandataire: **Korakis-Ménager, Sophie et al**
**Compagnie Financière Alcatel**
**Département de Propriété Industrielle,**
**5, rue Noel Pons**
**92734 Nanterre Cedex (FR)**

(54) **Terminal de télécommunication pour générer un signal sonore à partir d'un son enregistré par l'utilisateur**

(57) La présente invention concerne un terminal (1) de télécommunication pour générer une mélodie personnalisée à partir d'un signal audio analogique enregistré par l'utilisateur, plus particulièrement adapté à la téléphonie mobile. Le terminal (1) comporte des moyens (2) d'entrée pour recevoir un signal audio (S) analogique comprenant au moins une note, des moyens (3, 4) pour échantillonner et convertir ledit signal audio (S) analogique en un signal numérique et des moyens (5) pour extraire à partir dudit signal numérique au moins trois paramètres $\{F_i, T_{si}, D_i\}$ représentatifs dudit signal audio analogique que sont la fréquence, la date de début et la durée de ladite note. Selon l'invention, il comporte des moyens pour modifier au moins un des trois paramètres $\{F'_i, T'_{si}, D'_i\}$ de façon à corriger les imperfections sonores liées à la qualité ou au traitement dudit signal audio analogique.

**Fig. 1**

**Description**

La présente invention concerne un terminal de télécommunication pour générer une mélodie personnalisée à partir d'un signal audio analogique enregistré par l'utilisateur, plus particulièrement adapté à la téléphonie mobile.

De plus en plus d'utilisateurs de téléphones mobiles utilisent une même sonnerie indicatrice d'appel préenregistrée. Ainsi, lorsqu'un appareil sonne, il est très difficile de différencier les mobiles par leurs sonneries et l'utilisateur peut croire qu'il reçoit un appel alors qu'il s'agit d'un appel effectué sur un téléphone voisin. Ce type de problème est d'autant plus critique que l'utilisateur répond alors qu'il est occupé à une autre activité et que l'appel ne lui est pas destiné.

De même, l'utilisateur d'un assistant numérique peut souhaiter utiliser des alertes sonores différentes selon les applications.

Le document de brevet W09965221 décrit une solution à ce problème.

Pour cela, le dispositif de télécommunication décrit dans ce document comprend un microphone dans lequel l'utilisateur peut siffler une mélodie. Ce signal sifflé est un signal audio analogique qui est échantillonné et numérisé via un convertisseur analogique numérique. Le dispositif comporte en outre des moyens permettant d'analyser ce signal et d'en extraire des paramètres représentatifs de notes caractérisées par une fréquence et une durée. Les méthodes d'extraction utilisées mêlent la détection du niveau du signal permettant de définir la durée des notes et des méthodes de détection de fréquence telles que la transformée de Fourier rapide FFT (Fast Fourier Transform), un procédé du type « zero crossing » ou un procédé reposant sur la moyenne de la valeur absolue de la différence du type AMDF (Absolute Mean Difference Function). La détection de niveau de signal est similaire à la détection d'activité vocale VAD (Voice Activity Detection) mise en oeuvre dans le codage de la parole. Les paramètres sont ensuite stockés dans une mémoire et pourront être utilisés pour générer par exemple une sonnerie de téléphone personnalisée.

Toutefois, sa mise en oeuvre pose certaines difficultés.

En effet, le son stocké n'est pas nécessairement de bonne qualité. Ce problème peut provenir de la qualité insuffisante du microphone, d'une imprécision dans la méthode d'extraction ou simplement d'un son mal sifflé par l'utilisateur.

La présente invention vise à fournir un terminal de télécommunication permettant de générer une mélodie personnalisée de bonne qualité à partir d'un signal audio analogique enregistré par un utilisateur.

La présente invention propose à cet effet un terminal de télécommunication permettant de générer une mélodie personnalisée comportant des moyens d'entrée pour recevoir un signal audio analogique comprenant au moins une note, des moyens pour échantillonner et convertir ledit signal audio analogique en un signal numérique et des moyens pour extraire à partir dudit signal numérique au moins trois paramètres représentatifs dudit signal audio analogique que sont la fréquence, la date de début et la durée de ladite note, **caractérisé en ce que** ledit terminal comporte des moyens pour modifier au moins un des trois paramètres de façon à corriger les imperfections sonores liées à la qualité ou au traitement dudit signal audio analogique.

Avantageusement, le terminal comporte des moyens de détection du tempo.

Selon une variante particulièrement avantageuse, le terminal de télécommunication comporte des moyens pour corriger les dates de début et la durée des notes associées au dit signal audio reçu afin d'obtenir une meilleure concordance avec ledit tempo détecté par lesdits moyens de détection du tempo.

Avantageusement, le terminal comporte des moyens pour déterminer une nouvelle fréquence à partir de la fréquence extraite de ladite note, ladite nouvelle fréquence étant égale à une fréquence théorique d'une gamme musicale.

Selon une autre variante très avantageuse, le terminal comporte des moyens pour détecter la tonalité de la musique.

Avantageusement, le terminal comporte des moyens pour améliorer les fréquences des notes associées au dit signal audio reçu afin d'obtenir une meilleure concordance avec les fréquences théoriques de la tonalité détectée par lesdits moyens de détection de tonalité.

De manière avantageuse, le terminal comporte des moyens pour modifier manuellement la fréquence, la date de début ou la durée d'une note.

Avantageusement, ledit terminal de télécommunication est un téléphone mobile.

D'autres caractéristiques et avantages de la présente invention apparaîtront dans la description suivante d'un mode de réalisation de l'invention, donné à titre illustratif et nullement limitatif.

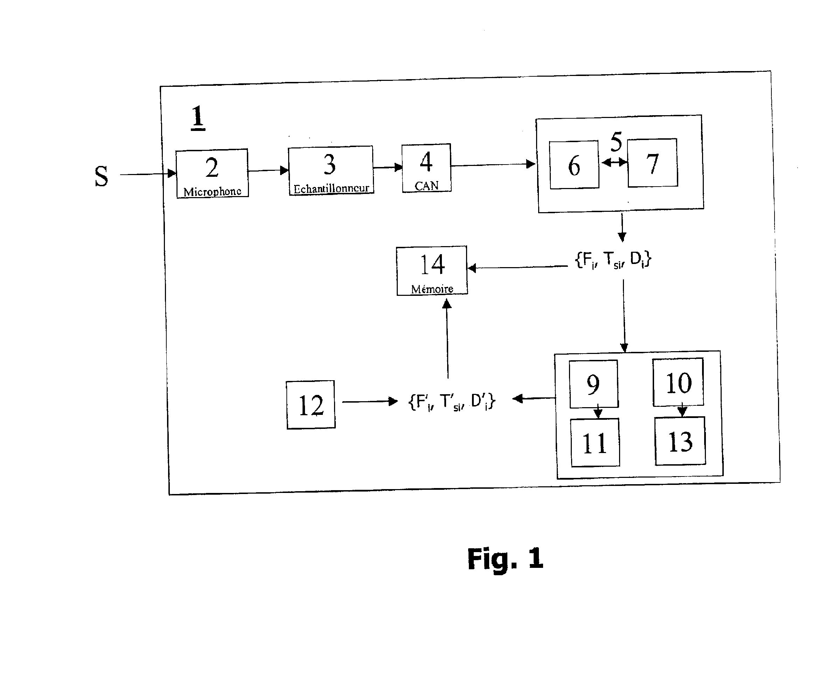

La figure 1 représente schématiquement un terminal de télécommunication selon l'invention.

En figure 1, un terminal 1 de télécommunication selon l'invention comporte un microphone 2 pour recevoir un signal audio analogique, un échantillonneur 3 et un convertisseur analogique numérique 4, des moyens 5 d'extraction de paramètres, un détecteur 9 de tempo, des moyens 11 pour corriger les dates de début et la durée de notes, un détecteur 10 de tonalité, des moyens 13 pour améliorer les fréquences de notes, des moyens 12 pour modifier manuellement des notes et une mémoire 14.

Les moyens 5, 9, 10, 11 et 13 sont des moyens logiciels exécutés par un processeur programmable non représenté.

Les moyens d'extraction 5 comportent un détecteur 6 de niveau du signal et des moyens 7 d'extraction de fréquence.

En utilisant le terminal 1 tel qu'un téléphone mobile, l'utilisateur transmet, par exemple via un sifflement, un signal sonore S sur le microphone 2.

Ce signal S est échantillonné par l'échantillonneur 3 et numérisé par le convertisseur analogique numérique 4.

Les moyens d'extraction 5 reçoivent donc un signal numérique.

Le détecteur 6 du niveau du signal permet de déterminer la durée des notes du signal.

Les moyens d'extraction de fréquence 7 mettent en oeuvre une méthode de détection de fréquence utilisant par exemple une transformée de Fourier rapide FFT (Fast Fourier Transform), un procédé du type « zero crossing » ou un procédé reposant sur la moyenne de la valeur absolue de la différence ou l'autocorrélation. Les moyens d'extraction de fréquence 7 permettent ainsi de déterminer les fréquences associées au signal numérique.

Le détecteur du niveau du signal 6 et les moyens d'extraction de fréquence 7 peuvent également être combinés : à cet effet, un critère Ci est calculé sur la base de la détection du niveau du signal, par exemple la valeur instantanée du niveau du signal divisée par la valeur moyenne sur une durée passée de 100 ms. Un deuxième critère $C_2$ est calculé sur la base de la détection de la fréquence principale du signal comme par exemple la valeur maximum de la fonction AMDF divisée par la valeur moyenne sur l'intervalle des fréquences analysées. Ces deux critères sont combinés en un critère de décision $C_d = f(C_1, C_2)$ qui est utilisé pour déterminer le début et la fin des notes. Par exemple, le début d'une note est détecté quand $C_d$ passe au-dessus d'une certaine valeur $C_{d0}$.

Les moyens d'extraction 5 permettent donc de déterminer un ensemble de fréquences associées chacune à une durée que l'on représentera indifféremment par la suite par un ensemble de 3 paramètres $\{F_i, T_i, D_i\}$, où $F_i$ est la fréquence de la note i, $T_i$ est l'instant de début de la note i et $D_i$ est la durée de la note i, ou par un ensemble de trois paramètres $\{F_i, T_{si}, T_{ei}\}$, où $F_i$ est la fréquence de la note i, $T_{ei}$ est l'instant de début de la note i c'est à dire $T_i$ et $T_{si}$ est l'instant de fin de la note i. On a donc la durée $D_i$ qui est égale à la différence $T_{ei} - T_{si}$.

Il peut s'avérer ensuite nécessaire de corriger les valeurs de durée et de fréquence des notes, lesquelles ne correspondent pas toujours ni à des fréquences de notes théoriques, ni à un tempo théorique. Ce problème peut provenir de la qualité insuffisante du microphone 2, d'une imprécision dans la méthode utilisée par les moyens d'extraction 5 ou simplement d'un son sifflé par l'utilisateur de mauvaise qualité.

Le détecteur de tempo 9 va commencer par détecter un tempo puis les moyens 11 vont corriger les dates de début et la durée des notes associées au signal S audio reçu afin d'obtenir une meilleure concordance avec le tempo détecté. Pour cela, les moyens 11 vont par exemple déterminer de nouveaux paramètres $T'_{si}$ et $D'_i$ en concordance avec ce tempo détecté.

Ainsi, le détecteur de tempo 9 commence par déterminer un tempo adapté au signal audio d'entrée.

Un procédé pour déterminer un tel tempo ou pulsation consiste par exemple à :

- placer l'ensemble des $T_{si}$ sur une échelle des temps en partant d'un temps t=0,
- définir un tempo variable B, par exemple entre 0,5 et 4 pulsations par seconde (soit une durée de note noire comprise entre 0,25 et 2 s),
- faire varier B de sorte que le tempo variable et les $T_{si}$ concordent, par exemple en ayant un maximum de valeur de $T_{si}$ dans un intervalle

$$\left[ k \times B - \frac{B}{10} ; k \times B + \frac{B}{10} \right],$$

c'est à dire que $T_{si}$ est dans un intervalle inférieur à un quart de pulsation, ici un cinquième, autour de la pulsation B.

Le détecteur 9 de tempo détermine ainsi une valeur de B qui va permettre aux moyens de correction 11 de définir des nouvelles valeurs de $T_{si}$, notées $T'_{si}$ telles que :

$$T'_{si} = k \times B + \frac{i \times B}{n} \ , \ \text{où} \ k \in \mathbb{N}, i \in \{0,1\} \text{et } n \in \left\{ 2, 3, 4, \frac{4}{3}, \frac{8}{3} \right\}$$

Le détecteur de tempo 9 et les moyens de correction 11 procèdent de même pour déterminer des paramètres $T'_{ei}$ déduits à partir des paramètres $T_{ei}$ et en déduit la valeur de $D'_i$ égale à $T'_{ei} - T'_{si}$.

Les moyens d'amélioration des fréquences de notes 13 vont améliorer les fréquences associées au dit signal audio reçu afin d'obtenir une meilleure concordance avec les fréquences théoriques d'une gamme musicale de sorte que l'on obtient de nouvelles fréquences $F'_i$ correspondant aux notes théoriques de cette gamme.

Un procédé pour améliorer la tonalité consiste par exemple à se placer dans l'hypothèse d'une gamme diatonique tempérée et à ajuster les fréquences $F_i$ sur les fréquences des notes théoriques les plus proches.

Ce procédé peut être amélioré en détectant précisément la tonalité. Pour cela, le détecteur de tonalité 10 analyse les fréquences $F_i$ pour vérifier si elles se trouvent dans des intervalles de largeur égale à environ trois comas autour d'une fréquence de note diatonique telle que fa, fa#, do ou do#. En dénombrant un nombre significatif de fréquences dans un intervalle, le détecteur 10 en déduit la tonalité.

Par exemple, si 15 fa# se trouvent parmi 19 notes regroupant les fa et les fa# et si 30 do# se trouvent parmi 32 notes regroupant les do et les do#, la tonalité a une grande probabilité d'être le ré majeur.

Les moyens 13 pour améliorer les fréquences de notes vont alors arrondir toutes les fréquences $F_i$ sur les fréquences des notes de cette tonalité et déterminer les nouvelles fréquences $F'_i$. La tonalité détectée est prise en compte en définissant des intervalles de décision plus grands autour des notes principales de la tonalité.

L'ensemble des informations constituées par l'ensemble de paramètres $\{F_i, T_{si}, D_i\}$ ou l'ensemble amélioré $\{F'_i, T'_{si}, D'_i\}$ est stocké dans une mémoire 14.

Enfin, l'utilisateur peut modifier manuellement les notes par le biais de moyens 12 incorporant par exemple un dispositif d'affichage indiquant la portée correspondant aux notes détectées.

## Revendications

1. Terminal (1) de télécommunication permettant de générer une mélodie personnalisée comportant des moyens (2) d'entrée pour recevoir un signal audio (S) analogique comprenant au moins une note, des moyens (3, 4) pour échantillonner et convertir ledit signal audio (S) analogique en un signal numérique et des moyens (5) pour extraire à partir dudit signal numérique au moins trois paramètres ($F_i$, $T_{si}$, $D_i$) représentatifs dudit signal audio analogique que sont la fréquence, la date de début et la durée de ladite note, **caractérisé en ce que** ledit terminal comporte des moyens pour modifier au moins un des trois paramètres ($F'_i$, $T'_{si}$, $D'_i$) de façon à corriger les imperfections sonores liées à la qualité ou au traitement dudit signal audio analogique.

2. Terminal (1) de télécommunication selon l'une des revendications précédentes **caractérisé en ce qu'**il comporte des moyens (9) de détection du tempo.

3. Terminal (1) de télécommunication selon la revendication précédente, ledit signal audio (S) analogique comportant une pluralité de notes, **caractérisé en ce que** ledit terminal comporte des moyens (11) pour corriger les dates de début et la durée des notes associées au dit signal audio reçu afin d'obtenir une meilleure concordance avec ledit tempo détecté par lesdits moyens (9) de détection du tempo.

4. Terminal (1) de télécommunication selon l'une des revendications précédentes **caractérisé en ce qu'**il comporte des moyens (10, 13) pour déterminer une nouvelle fréquence à partir de la fréquence extraite de ladite note, ladite nouvelle fréquence étant égale à une fréquence théorique d'une gamme musicale.

5. Terminal (1) de télécommunication selon l'une des revendications précédentes **caractérisé en ce qu'**il comporte des moyens (10) de détection de la tonalité.

6. Terminal (1) de télécommunication selon la revendication précédente, ledit signal audio (S) analogique comportant une pluralité de notes, **caractérisé en ce que** ledit terminal comporte des moyens (13) pour améliorer les fréquences des notes associées au dit signal audio reçu afin d'obtenir une meilleure concordance avec les fréquences théoriques de la tonalité détectée par lesdits moyens (10) de détection de la tonalité.

7. Terminal (1) de télécommunication selon l'une des revendications précédentes **caractérisé en ce qu'**il comporte des moyens (12) pour modifier manuellement la fréquence, la date de début ou la durée de notes.

8. Terminal (1) de télécommunication selon l'une des revendications précédentes **caractérisé en ce que** ledit terminal de télécommunication est un téléphone mobile.

**Fig. 1**

$\underline{1}$

2 — Microphone

3 — Echantillonneur

4 — CAN

6 | 5 | 7

$\{F_i, T_{si}, D_i\}$

14 — Mémoire

9 → 11

10 → 13

12

$\{F'_i, T'_{si}, D'_i\}$

S

**Office européen des brevets**

**RAPPORT DE RECHERCHE EUROPEENNE**

Numéro de la demande

EP 03 29 1084

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 933 917 A (MATSUSHITA ELECTRIC IND CO LTD) 4 août 1999 (1999-08-04) <br> * colonne 2, ligne 18 - ligne 37 * <br> * colonne 3, ligne 16 - ligne 46 * <br> * colonne 5, ligne 16 - ligne 58 * <br> * colonne 8, ligne 14 - colonne 10, ligne 56; figures 3,5 * <br> --- | 1-8 | H04M19/04 |
| A | EP 1 014 674 A (NOKIA MOBILE PHONES LTD) 28 juin 2000 (2000-06-28) <br> * colonne 4, ligne 18 - ligne 51 * <br> * colonne 5, ligne 57 - colonne 7, ligne 33 * <br> * colonne 8, ligne 20 - colonne 9, ligne 47 * <br> --- | 1-8 | |
| A | GB 2 366 656 A (NIPPON ELECTRIC CO) 13 mars 2002 (2002-03-13) <br> * abrégé * <br> * page 10, ligne 8 - page 11, ligne 4 * <br> * page 11, ligne 20 - page 15, ligne 21 * <br> --- | 1-8 | |
| | | | **DOMAINES TECHNIQUES RECHERCHES (Int.Cl.7)** |
| A | DE 299 10 036 U (LAUTERBACH SYBILLE) 12 août 1999 (1999-08-12) <br> * page 8, ligne 10 - page 11, ligne 5 * <br> ----- | 1-8 | H04M |

Le présent rapport a été établi pour toutes les revendications

| Lieu de la recherche | Date d'achèvement de la recherche | Examinateur |
|---|---|---|
| LA HAYE | 23 juillet 2003 | Montalbano, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 29 1084

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-07-2003

| Document brevet cité au rapport de recherche | | Date de publication | Membre(s) de la famille de brevet(s) | | Date de publication |
|---|---|---|---|---|---|
| EP 0933917 | A | 04-08-1999 | JP | 11220518 A | 10-08-1999 |
| | | | AU | 750269 B2 | 11-07-2002 |
| | | | AU | 1428399 A | 19-08-1999 |
| | | | CN | 1230070 A | 29-09-1999 |
| | | | EP | 0933917 A1 | 04-08-1999 |
| | | | US | 6308086 B1 | 23-10-2001 |
| EP 1014674 | A | 28-06-2000 | GB | 2345221 A | 28-06-2000 |
| | | | EP | 1014674 A1 | 28-06-2000 |
| GB 2366656 | A | 13-03-2002 | JP | 2001265336 A | 28-09-2001 |
| | | | US | 2001024490 A1 | 27-09-2001 |
| DE 29910036 | U | 12-08-1999 | DE | 29910036 U1 | 12-08-1999 |

EPO FORM P0460